# EUROPÄISCHE PATENTANMELDUNG

(11) **EP 3 923 096 A1**
(43) Veröffentlichungstag der Anmeldung: **15.12.2021**
(21) Anmeldenummer: 20179093.8
(22) Anmeldetag: 09.06.2020
(51) Int. Cl.: G05B 19/418, B23Q 3/155, B23Q 7/00, B62D 65/02, B65G 1/00

(54) **SPEICHEREINHEIT FÜR EINE BE- UND ENTLADEVORRICHTUNG SOWIE BE- UND ENTLADEVORRICHTUNG ZUM BE- UND ENTLADENB MINDESTENS EINER MASCHINE**

(71) Anmelder: SW Automation GmbH, 88069 Tettnang (DE)
(72) Erfinder: MAKIS, Sven, 88085 Langenargen (DE)
(74) Vertreter: Schorr, Peter Karl

(57) **Zusammenfassung**

Die Erfindung betrifft eine Speichereinheit (6) für eine Be- und Entladevorrichtung (2), mit mindestens einem ersten Ladeabschnitt (8) zum manuellen und/oder automatischen Be- und/oder Entladen eines Werkstücks (10) und/oder Werkzeugs, mit mindestens einem dem mindestens einen ersten Ladeabschnitt (8) zugeordneten Andockabschnitt (26) für ein autonom geführtes Fahrzeug (24), durch den das autonom geführte Fahrzeug (24) in eine definierte oder definierbare Be- und/oder Entladeposition führbar und in dieser festlegbar ist, und mit mindestens einem Be- und/oder Entlademittel (28) der Speichereinheit (6) und/oder des autonom geführten Fahrzeugs (24), durch das das mindestens eine Werkstück (10) und/oder Werkzeug von dem autonom geführten Fahrzeug (24) an den ersten Ladeabschnitt (8) übergebbar ist oder umgekehrt.

Darüber hinaus betrifft die Erfindung eine Be- und Entladevorrichtung (2) mit einer derartigen Speichereinheit (6).

## Beschreibung

Die Erfindung betrifft eine Speichereinheit für eine Be- und Entladevorrichtung sowie eine Be- und Entladevorrichtung zum Be- und Entladen mindestens einer Maschine.

Aus dem Stand der Technik sind Speichereinheiten für Be- und Entladevorrichtungen bekannt, die beispielsweise als Hochregallager ausgebildet sind. In diesen sind Werkstücke und/oder Werkzeuge bevorratbar. Aus den bekannten Hochregallagern sind Werkstücke und/oder Werkzeuge durch eine Bedienperson und/oder durch eine Handlingeinheit entnehmbar und einer Maschine zuführbar.

Bei den bekannten Speichereinheiten hat es sich als unzweckmäßig erwiesen, dass diese manuell beladen werden müssen. Dieses erweist sich als umständlich und zeitaufwändig.

Darüber hinaus sind aus dem Stand der Technik Be- und Entladevorrichtungen bekannt, bei denen Handlingeinheiten, insbesondere Roboter, im Bereich der Maschine am Boden oder auf einer zum Boden beabstandeten Transportschiene bewegbar angeordnet sind, um die Maschine mit Werkstücken und/oder Werkzeugen zu beladen. Hierbei hat es sich als nachteilig herausgestellt, dass die Handlingeinheiten, wenn diese schienengeführt bewegbar sind, verfahren werden müssen, um neue Werkstücke und/oder Werkzeuge aus einem Magazin abzuholen oder diese dort abzugeben, oder die, wenn die Handlingeinheit in unmittelbarer Nähe zur Maschine ortsfest am Boden festgelegt ist, die Zugänglichkeit der Maschine erschweren.

Eine Aufgabe eines Ausführungsbeispiels der Erfindung ist, eine Speichereinheit für eine Be- und Entladevorrichtung sowie eine Be- und Entladevorrichtung zum Be- und Entladen mindestens einer Maschine vorzuschlagen, bei der eine effiziente Nutzung der miteinander agierenden Komponenten und eine Zugänglichkeit der Maschine verbessert ist.

Diese Aufgabe wird gelöst durch eine Speichereinheit für eine Be- und Entladevorrichtung, mit mindestens einem ersten Ladeabschnitt zum manuellen und/oder automatischen Be- und/oder Entladen eines Werkstücks und/oder Werkzeugs, mit mindestens einem dem mindestens einen ersten Ladeabschnitt zugeordneten Andockabschnitt für ein autonom geführtes Fahrzeug, durch den das autonom geführte Fahrzeug in eine definierte oder definierbare Be- und/oder Entladeposition führbar und in dieser festlegbar ist, und mit mindestens einem Be- und/oder Entlademittel der Speichereinheit und/oder des autonom geführten Fahrzeugs, durch das das mindestens eine Werkstück und/oder Werkzeug von dem autonom geführten Fahrzeug an den ersten Ladeabschnitt übergebbar ist oder umgekehrt.

Dadurch, dass die Speichereinheit einen dem mindestens einen ersten Ladeabschnitt zugeordneten Andockabschnitt für ein autonom geführtes Fahrzeug umfasst, durch den das autonom geführte Fahrzeug in eine definierte oder definierbare Be- und Entladeposition führbar ist, ist die Speichereinheit ohne Bedienpersonal automatisch be- und entladbar. Hierdurch ist der Automatisierungsgrad zum Betrieb von Anlagen mit einer oder mehrerer Maschinen steigerbar.

Die Werkstücke und/oder Werkzeuge können einzeln dem ersten Ladeabschnitt zugeführt werden. Darüber hinaus ist es denkbar, dass mehrere Werkstücke und/oder Werkzeuge gemeinsam übergebbar sind und beispielsweise in einer Transportbox und/oder auf einer Palette angeordnet sind.

Bei der Maschine kann es sich um eine Maschine oder Werkzeugmaschine für Materialbearbeitung und Produktion handeln.

Das Belademittel kann grundsätzlich ein beliebiges Entlademittel umfassen, um das mindestens eine Werkstück und/oder das mindestens eine Werkzeug vom autonom geführten Fahrzeug oder der manuellen Bedienperson an den ersten Ladeabschnitt zu übergeben oder vom ersten Ladeabschnitt an das autonom geführte Fahrzeug oder der Bedienperson zu übergeben. Hierbei kann das Entlademittel beispielsweise greiferartig ausgebildet sein und/oder das mindestens eine Werkstück und/oder Werkzeug in Richtung einer Hochachse der Speichereinheit und/oder quer dazu bewegen. Es erweist sich als vorteilhaft, wenn das mindestens eine Werkstück und/oder Werkzeug parallel oder schräg zu einer Beladefläche des ersten Ladeabschnitts übergebbar ist.

Solchenfalls kann das mindestens eine Werkstück und/oder Werkzeug auf einfache Weise auf einer Ebene überführt werden, ohne dass es entlang einer Hochachse der Speichereinheit bewegt werden muss. Es ist denkbar, dass die der Speichereinheit zugeführten Werkstücke und/oder Werkzeuge unmittelbar an ein Handlinggerät weitergereicht werden. Bei einer Ausführungsform der Speichereinheit erweist es sich als vorteilhaft, wenn die Speichereinheit mindestens einen Speicherabschnitt umfasst, in dem mindestens eines des mindestens einen Werkstück und/oder Werkzeug bevorratbar ist. Solchenfalls kann die Speichereinheit mit einer Mehrzahl von Werkstücken und/oder Werkzeugen bevorratet werden.

Ferner kann die Speichereinheit durch ein und denselben ersten Ladeabschnitt zum Befüllen beispielsweise des Speicherabschnitts beladen werden sowie durch ein Handlinggerät über denselben ersten Ladeabschnitt entladen werden, um eine Maschine mit Werkstücken und/oder Werkzeugen zu befüllen. Bei einer Ausführungsform der Speichereinheit umfasst diese mindestens einen zum ersten Ladeabschnitt beabstandeten zweiten Ladeabschnitt zum manuellen und/oder automatischen Be- und/oder Entladen des Werkstücks und/oder Werkzeugs.

Solchenfalls kann die Speichereinheit sowohl durch den ersten Ladeabschnitt als auch den zweiten Ladeabschnitt beladen oder entladen werden oder an einem der beiden Ladeabschnitte beladen werden und an dem verbleibenden Ladeabschnitt entladen werden.

Bei einer Weiterbildung letztgenannter Ausführungsform erweist es sich als vorteilhaft, wenn der erste Ladeabschnitt zu einem Boden, an dem die Speichereinheit anodenbar oder angeordnet ist, einen Abstand von mindestens 0,5 m, insbesondere mindestens 0,8 m, insbesondere mindestens 1,0 m, umfasst und/oder wenn der zweite Ladeabschnitt zum Boden einen Abstand von mindestens 1,8 m, insbesondere mindestens 2,0 m, insbesondere mindestens 2,2 m, umfasst.

Wenn der erste Ladeabschnitt zu einem Boden, an dem die Speichereinheit angeordnet ist, einen Abstand von mindestens 0,5 m, insbesondere mindestens 0,8 m, insbesondere mindestens 1,0 m umfasst, können die autonom geführten Fahrzeuge kompakt ausgebildet werden, um die Speichereinheit über den ersten Ladeabschnitt zu beladen oder zu entladen.

Wenn der zweite Ladeabschnitt zum Boden einen Abstand von mindestens 1,8 m, insbesondere mindestens 2,0 m, insbesondere mindestens 2,2 m umfasst, kann die Speichereinheit beispielsweise durch ein Handlinggerät zum Boden beabstandet entladen werden, um beispielsweise eine Maschine von oben zu beladen.

Bei Ausführungsformen der Speichereinheit können mehrere erste Ladeabschnitte und/oder mehrere zweite Ladeabschnitte vorgesehen sein.

Bei einer Ausführungsform können zwei erste Ladeabschnitte auf einander gegenüberliegenden oder angrenzenden Seiten der Speichereinheit vorgesehen sein. Solchenfalls kann eine der zwei ersten Ladeabschnitte beladen werden, während gleichzeitig die zweite der zwei ersten Ladeabschnitte entladen wird. Gleiches gilt, wenn die Speichereinheit mindestens zwei zweite Ladeabschnitte umfasst.

Ferner können einer Speichereinheit mehreren Maschinen und/oder mehrere Handlingeinheiten zugeordnet sein.

Um das mindestens eine Werkstück und/oder Werkzeug vom ersten Ladeabschnitt zum zweiten Ladeabschnitt zu transportieren, umfasst eine Ausführungsform der Speichereinheit mindestens ein Transportmittel durch das mindestens eines des mindestens einen Werkstücks und/oder Werkzeugs vom ersten Ladeabschnitt, zweiten Ladeabschnitt und/oder Speicherabschnitt zum ersten Ladeabschnitt, zweiten Ladeabschnitt und/oder Speicherabschnitt transportierbar ist.

Das mindestens eine Transportmittel kann technisch beliebig ausgebildet sein, sofern es der Funktion nachkommt, das mindestens eine Werkstück und/oder Werkzeug vom ersten Ladeabschnitt zum zweiten Ladeabschnitt und/oder zum Speicherabschnitt, bzw. vom zweiten Ladeabschnitt zum ersten Ladeabschnitt und/oder zum Speicherabschnitt oder vom Speicherabschnitt zum ersten Ladeabschnitt und/oder zweiten Ladeabschnitt zu transportieren. Es lässt sich einfach und kostengünstig ausbilden, wenn das mindestens eine Transportmittel fahrstuhlartig oder pater-noster-artig ausgebildet ist.

Darüber hinaus umfasst eine Ausführungsform der Speichereinheit mindestens zwei erste Ladeabschnitte, wobei mindestens einer der mindestens zwei ersten Ladeabschnitte dem Beladen der Speichereinheit zugeordnet ist und mindestens einer der mindestens zwei ersten Ladeabschnitte dem Entladen der Speichereinheit zugeordnet ist und/oder mindestens zwei zweite Ladeabschnitte, wobei mindestens einer der mindestens zwei zweiten Ladeabschnitte dem Beladen der Speichereinheit zugeordnet ist und mindestens einer der mindestens zwei zweiten Ladeabschnitte dem Entladen der Speichereinheit zugeordnet ist.

Darüber hinaus wird die Aufgabe gelöst durch eine Be- und Entladevorrichtung zum Be- und Entladen mindestens einer Maschine, mit mindestens einer Speichereinheit, insbesondere mit mindestens einem der zuvor genannten Merkmale, die mindestens einen ersten Ladeabschnitt zum manuellen und/oder automatischen Be- und/oder Entladen eines Werkstücks und/oder Werkzeugs und mindestens einen zum ersten Ladeabschnitt beabstandeten zweiten Ladeabschnitt zum manuellen und/oder automatischen Be- und/oder Entladen eines Werkstücks und/oder Werkzeugs, und die mindestens ein Transportmittel umfasst, durch das das Werkstück und/oder Werkzeug vom ersten Ladeabschnitt zum zweiten Ladeabschnitt und/oder umgekehrt transportierbar ist, mit mindestens einer Handlingeinheit, wie Roboter, durch die das Werkstück und/oder Werkzeug von dem zweiten Ladeabschnitt entnehmbar und einer Maschine zuführbar ist oder umgekehrt und mit mindestens einer Bühne, die eine Arbeitsfläche umfasst, die zu einem Boden, an dem die Speichereinheit und/oder die Maschine angeordnet ist/sind, beabstandet ist und auf der zumindest die Handlingeinheit anordenbar oder angeordnet ist, um die Maschine von oben zu beladen.

Dadurch, dass die Be- und/oder Entladevorrichtung eine Bühne umfasst, die eine Arbeitsfläche umfasst, die zu einem Boden, an dem die Speichereinheit und/oder die Maschine angeordnet ist, beabstandet ist, und auf der zumindest die Handlingeinheit angeordnet ist, um die Maschine von oben zu beladen, kann die Handlingeinheit zu einem Boden beabstandet angeordnet werden, wodurch die Zugänglichkeit der Maschine durch eine Bedienperson verbessert ist. Dadurch, dass die Handlingeinheit über den zweiten Ladeabschnitt der Speichereinheit des mindestens eine Werkstück und/oder Werkzeug entnehmen kann, kann solchenfalls die Maschine auf einfache Weise von oben be- und entladen werden sowie die Speichereinheit zum Boden beabstandet be- und entladen werden.

Eine Bedienperson kann auf einfache Weise zur Maschine gelangen, wenn die Arbeitsfläche der Bühne zum Boden einen Abstand von mindestens 1,8 m, insbesondere mindestens 2,0 m, insbesondere mindestens 2,2 m, aufweist.

Hierdurch ist die Zugänglichkeit der Maschine vom Boden aus gewährleistet. Gleichzeitig kann hierdurch bereitgestellt werden, dass die Maschine von oben beladen wird.

Die Bühne kann ein zum Boden beabstandetes Schienenmittel umfassen, auf dem die Maschine bewegbar verfahrbar ist. Bei einer Ausführungsform der Be- und Entladevorrichtung erweist es sich als vorteilhaft, wenn die Bühne die Speichereinheit zur Maschine beabstandet ist, wenn die Bühne zwischen Speichereinheit und Maschine erstreckt angeordnet ist und/oder wenn die Bühne einen zwischen Speichereinheit und Maschine vorhandenen Freiraum zumindest abschnittsweise oder in Gänze überfängt.

Hierdurch wird durch die Bühne ein Freiraum zwischen Speichereinheit und Maschine überspannt und bildet hierdurch ein Schutzdach für eine Bedienperson, die sich unterhalb der Bühne befindet. Fallen solchenfalls bei einem Be- oder Entladen der Maschine und/oder der Speichereinheit im oder an der Handlingeinheit angeordnete Werkstücke und/oder Werkzeuge von der Handlingeinheit herab, werden diese durch die Bühne im Fall blockiert, bevor diese den Boden erreichen können.

Darüber hinaus ist bei einer Weiterbildung der Be- und Entladevorrichtung vorgesehen, dass die Handlingeinheit relativ zur Bühne ortsfest festlegbar oder festgelegt ist.

Solchenfalls ist die Handlingeinheit ortsfest zwischen Maschine und Speichereinheit angeordnet.

Um ein Warten der Handlingeinheit zu vereinfachen, erweist es sich als vorteilhaft, wenn die Be- und Entladevorrichtung mindestens ein zumindest vom Boden bis zur Bühne erstrecktes Steigmittel umfasst, durch das die Bühne durch eine Bedienperson begehbar ist.

Schließlich erweist es sich als vorteilhaft, wenn der zweite Ladeabschnitt eine Ladefläche umfasst, die parallel oder schräg zur Arbeitsfläche der Bühne angeordnet ist und/oder die die Arbeitsfläche der Bühne in Richtung Speichereinheit fortsetzt oder zur Arbeitsfläche versetzt angeordnet ist.

Hierdurch sind die Werkstücke und/oder Werkzeuge direkt auf Höhe der Arbeitsfläche der Bühne durch die Speichereinheit bereitstellbar. Hierdurch kann die Handlingeinheit kompakt ausgebildet werden und ein Be- und Entladen der Maschine sowie der Speichereinheit vereinfacht realisiert werden.

Bei einer Ausführungsform der Be- und Entladevorrichtung ist eine Speichereinheit mehreren Maschinen und/oder Handlingeinheiten zugeordnet. Solchenfalls kann über ein und denselben zweiten Ladeabschnitt zwei Maschinen durch ein und dieselbe Handlingeinheit be- und entladen werden.

Ferner kann jeder Maschine eine eigene Handlingeinheit und/oder ein eigener zweiter Ladeabschnitt zugeordnet sein. Darüber hinaus kann die Ladeeinheit abschnittsweise oder in Gänze von der Bühne umgeben sein und auf der Bühne eine oder mehrere Handlingeinheiten angeordnet sein.

Bei einer Ausführungsform der Be- und Entladevorrichtung sind mehrere Maschinen sternförmig um die Speichereinheit angeordnet.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Be- und Entladevorrichtung.

In der Zeichnung zeigt:
- Figur 1: Eine perspektivische Draufsicht auf ein Ausführungsbeispiel der Be- und Entladevorrichtung;
- Figur 2: Eine Draufsicht auf die Be- und Entladevorrichtung gemäß Figur 1 ;
- Figur 3: Eine perspektivische Draufsicht auf die Speichereinheit mit autonom geführten Fahrzeug gemäß Ausführungsbeispiel nach Figur 1.

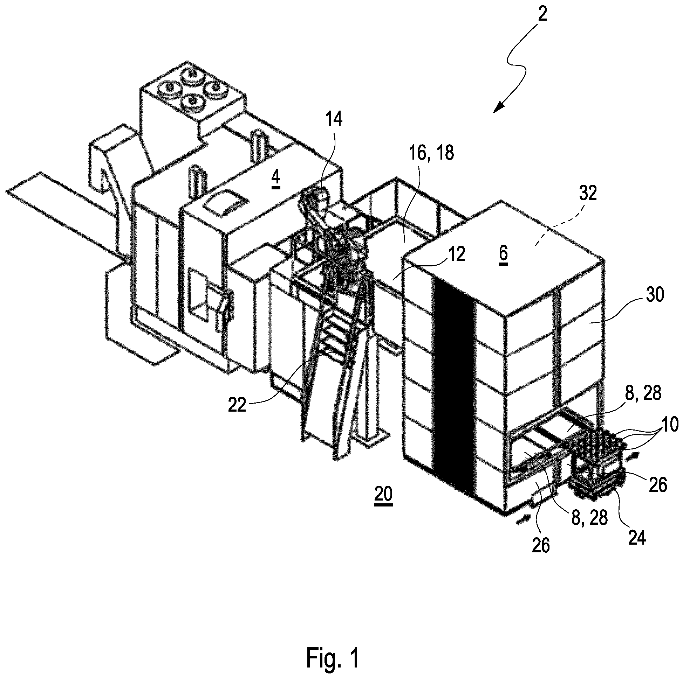

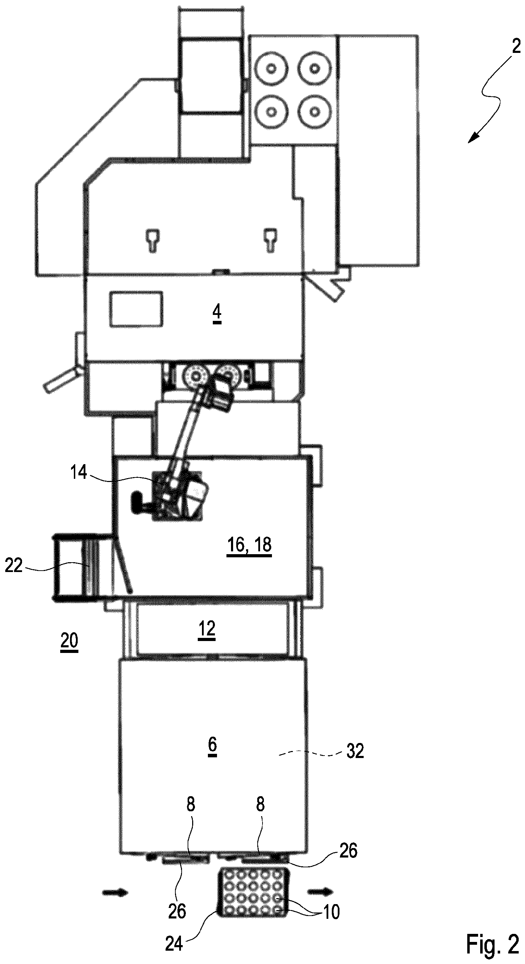

Die Figuren 1 und 2 zeigen eine insgesamt mit dem Bezugszeichen 2 versehene Be- und Entladevorrichtung zum Be- und Entladen mindestens einer Maschine 4. Die Be- und Entladevorrichtung 2 umfasst eine Speichereinheit 6, die mindestens einen ersten Ladeabschnitt 8 zum manuellen und/oder automatischen Be- und/oder Entladen eines Werkstücks 10 und mindestens einen zum ersten Ladeabschnitt 8 beabstandeten zweiten Ladeabschnitt 12 umfasst. Zum Be- und/oder Entladen des Werkstücks 10 vom zweiten Ladeabschnitt 12 der Speichereinheit 6, umfasst die Be- und Entladevorrichtung 2 eine Handlingeinheit 14, wie Roboter, durch die das Werkstück 10 von dem zweiten Ladeabschnitt 12 entnehmbar und der Maschine 4 zuführbar ist.

Bei den in den Figuren 1 und 2 gezeigten Ausführungsbeispiel ist die Handlingeinheit 14 auf einer Bühne 16 angeordnet, die eine Arbeitsfläche 18 umfasst. Die Arbeitsfläche 18 der Bühne 16 ist zu einem Boden 20, an dem die Maschine 4 und die Speichereinheit 6 angeordnet sind, beabstandet. Der Abstand ist hierbei derart gewählt, dass eine Bedienperson unter der Bühne 16 hindurchgehen kann. Der Abstand umfasst solchenfalls mindestens 1,8 m, insbesondere mindestens 2,0 m, insbesondere 2,2 m. Der zweite Ladeabschnitt 12 der Speichereinheit 6 ist ebenfalls derart angeordnet, dass dieser auf Höhe der Arbeitsfläche 18 der Bühne 16 angeordnet ist. Hierdurch ist der zweite Ladeabschnitt 12 auf einfache Weise durch die Handlingeinheit 14 erreichbar.

Die Bühne 16 ist derart ausgebildet, dass diese einen zwischen Speichereinheit 6 und Maschine 4 angeordneten Freiraum in Gänze überfängt. Hierdurch bildet die Bühne 16 einen Schutz für eine Bedienperson, die unterhalb der Bühne 16 steht, wenn die Handlingeinheit 14 die Maschine 4 mit einem Werkstück 10 be- oder entlädt, bzw. wenn die Handlingeinheit 14 den zweiten Ladeabschnitt 12 der Speichereinheit 6 mit einem Werkstück 10 be- oder entlädt.

Bei den in den Figuren 1 und 2 gezeigten Ausführungsbeispiel ist die Handlingeinheit 14 relativ zur Bühne 16 ortsfest festgelegt.

Um die Bühne 16 durch eine Bedienperson begehbar zu machen, umfasst die Be- und Entladevorrichtung 2 ein vom Boden 20 bis hin zur Arbeitsfläche 18 der Bühne 16 erstrecktes Steigmittel 22.

Die Speichereinheit 6 kann manuell oder automatisch be- oder entladen werden. Bei einem automatischen Be- und/oder Entladen kann hierfür ein autonom geführtes Fahrzeug 24 vorgesehen sein. Um ein automatisches Übergeben des mindestens einen Werkstücks 10 von dem autonom geführten Fahrzeug 24 an den ersten Ladeabschnitt 8 zu gewährleisten, umfasst die Speichereinheit 6 einen Andockabschnitt 26, der dem ersten Ladeabschnitt 8 funktionell zugeordnet ist.

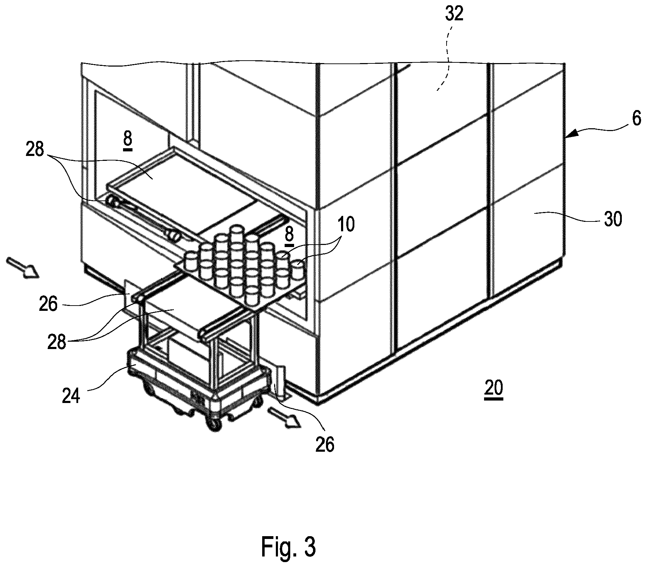

Bei dem in den Figuren 1 bis 3 dargestellten Ausführungsbeispiel der Be- und Entladevorrichtung 2, umfasst die Speichereinheit 6 zwei erste Ladeabschnitte 8 sowie zwei jeweils einem Ladeabschnitt 8 zugeordnete Andockabschnitte 26. Die Andockabschnitte 26 definieren eine Be- und/oder Entladeposition für das autonom geführte Fahrzeug 24.

Um das autonom geführte Fahrzeug 24 automatisch zu be- oder entladen, umfasst die Speichereinheit 6 sowie das autonom geführte Fahrzeug 24 ein Be- und/oder Entlademittel 28, das bei dem in den Figuren 1 bis 3 gezeigten Ausführungsbeispiel förderbandartig ausgebildet ist. Hierdurch kann das mindestens eine Werkstück 10, das bei dem in den Figuren gezeigten Ausführungsbeispiel mit mehreren Werkstücken 10 auf einer Palette angeordnet ist, in einer Ebene parallel zum Boden 20 übergeben werden.

Um das mindestens eine Werkstück 10 innerhalb der Speichereinheit 6 zu bevorraten, umfasst die Speichereinheit 6 einen Speicherabschnitt 30. Die Speichereinheit 6 umfasst ein Transportmittel 32, durch das die Werkstücke 10 von dem ersten Ladeabschnitt 8 zum Speicherabschnitt 30 zuführbar sind, bzw. vom Speicherabschnitt 30 dem ersten Ladeabschnitt 8, bzw. dem zweiten Ladeabschnitt 12 zuführbar sind. Dieses ist in den Figuren nicht explizit dargestellt. Das Transportmittel 32 kann fahrstuhlartig oder paternosterartig ausgebildet sein.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Be- und Entladevorrichtung
- 4: Maschine
- 6: Speichereinheit
- 8: erster Ladeabschnitt
- 10: Werkstück
- 12: zweiter Ladeabschnitt
- 14: Handlingeinheit
- 16: Bühne
- 18: Arbeitsfläche
- 20: Boden
- 22: Steigmittel
- 24: autonom geführtes Fahrzeug
- 26: Andockabschnitt
- 28: Be- und/oder Entlademittel
- 30: Speicherabschnitt
- 32: Transportmittel

## Patentansprüche

1. Speichereinheit (6) für eine Be- und Entladevorrichtung (2), mit mindestens einem ersten Ladeabschnitt (8) zum manuellen und/oder automatischen Be- und/oder Entladen eines Werkstücks (10) und/oder Werkzeugs, mit mindestens einem dem mindestens einen ersten Ladeabschnitt (8) zugeordneten Andockabschnitt (26) für ein autonom geführtes Fahrzeug (24), durch den das autonom geführte Fahrzeug (24) in eine definierte oder definierbare Be- und/oder Entladeposition führbar und in dieser festlegbar ist, und mit mindestens einem Be- und/oder Entlademittel (28) der Speichereinheit (6) und/oder des autonom geführten Fahrzeugs (24), durch das das mindestens eine Werkstück (10) und/oder Werkzeug von dem autonom geführten Fahrzeug (24) an den ersten Ladeabschnitt (8) übergebbar ist oder umgekehrt.

2. Speichereinheit (6) nach Anspruch 1, **dadurch gekennzeichnet, dass** das Be- und/oder Entlademittel (28) ein Förderband umfasst, durch das das mindestens eine Werkstück (10) und/oder Werkzeug parallel oder schräg zu einer Beladefläche des ersten Ladeabschnitts (8) übergebbar ist.

3. Speichereinheit (6) nach Anspruch 1 oder 2, **gekennzeichnet durch** mindestens einen Speicherabschnitt (30), in dem mindestens eines des mindestens einen Werkstücks (10) und/oder Werkzeugs bevorratbar ist.

4. Speichereinheit (6) nach mindestens einem der vorhergehenden Ansprüche, **gekennzeichnet durch** mindestens einen zum ersten Ladeabschnitt (8) beabstandeten zweiten Ladeabschnitt (12) zum manuellen und/oder automatischen Be- und/oder Entladen des Werkstücks (10) und/oder Werkzeugs.

5. Speichereinheit (6) nach Anspruch 4, **dadurch gekennzeichnet, dass** der erste Ladeabschnitt (8) zu einem Boden (20), an dem die Speichereinheit (6) anodenbar oder angeordnet ist, einen Abstand von mindestes 0,5 m, insbesondere mindestens 0,8 m, insbesondere mindestens 1,0 m, umfasst und/oder dass der zweite Ladeabschnitt (12) zum Boden (20) einen Abstand von mindestens 1,8 m, insbesondere mindestens 2,0 m, insbesondere mindestens 2,2 m, umfasst.

6. Speichereinheit (6) nach mindestens einem der vorhergehenden Ansprüche, **gekennzeichnet durch** mindestens ein Transportmittel (32), durch das mindestens eines des mindestens einen Werkstücks (10) und/oder Werkzeugs vom ersten Ladeabschnitt (8), zweiten Ladeabschnitt (12) und/oder Speicherabschnitt (30) zum ersten Ladeabschnitt (8), zweiten Ladeabschnitt (12) und/oder Speicherabschnitt (30) transportierbar ist.

7. Speichereinheit (6) nach Anspruch 6, **dadurch gekennzeichnet, dass** das mindestens eine Transportmittel (32) fahrstuhlartig oder paternosterartig ausgebildet ist.

8. Speichereinheit (6) nach mindestens einem der vorhergehenden Ansprüche, **gekennzeichnet, durch** mindestens zwei erste Ladeabschnitte (8), wobei mindestens einer der mindestens zwei ersten Ladeabschnitte (8) dem Beladen der Speichereinheit (6) zugeordnet ist und mindestens einer der mindestens zwei ersten Ladeabschnitte (8) dem Entladen der Speichereinheit (6) zugeordnet ist und/oder durch mindestens zwei zweite Ladeabschnitte (12), wobei mindestens einer der mindestens zwei zweiten Ladeabschnitte (12) dem Beladen der Speichereinheit (6) zugeordnet ist und mindestens einer der mindestens zwei zweiten Ladeabschnitte (12) dem Entladen der Speichereinheit (6) zugeordnet ist.

9. Be- und Entladevorrichtung (2) zum Be- und Entladen mindestens einer Maschine (4), mit mindestens einer Speichereinheit (6), insbesondere nach einem der Ansprüche 1 bis 8, die mindestens einen ersten Ladeabschnitt (8) zum manuellen und/oder automatischen Be- und/oder Entladen eines Werkstücks (10) und/oder Werkzeugs und mindestens einen zum ersten Ladeabschnitt (8) beabstandeten zweiten Ladeabschnitt (12) zum manuellen und/oder automatischen Be- und/oder Entladen eines Werkstücks (10) und/oder Werkzeugs, und die mindestens ein Transportmittel (32) umfasst, durch das das Werkstück (10) und/oder Werkzeug vom ersten Ladeabschnitt (8) zum zweiten Ladeabschnitt (12) und/oder umgekehrt transportierbar ist, mit mindestens einer Handlingeinheit (14), wie Roboter, durch die das Werkstück (10) und/oder Werkzeug von dem zweiten Ladeabschnitt (12) entnehmbar und einer Maschine (4) zuführbar ist oder umgekehrt und mit mindestens einer Bühne (16), die eine Arbeitsfläche (18) umfasst, die zu einem Boden (20), an dem die Speichereinheit (6) und/oder die Maschine (4) angeordnet ist/sind, beabstandet ist und auf der zumindest die Handlingeinheit (14) anordenbar oder angeordnet ist, um die Maschine (4) von oben zu beladen.

10. Be- und Entladevorrichtung (2) nach Anspruch 9, **dadurch gekennzeichnet, dass** die Arbeitsfläche (18) der Bühne (16) zum Boden (20) einen Abstand von mindestens 1,8 m, insbesondere mindestens 2,0 m, insbesondere mindestens 2,2 m, aufweist.

11. Be- und Entladevorrichtung (2) nach Anspruch 9 oder 10, **dadurch gekennzeichnet, dass** die Bühne (16) die Speichereinheit (6) zur Maschine (4) beabstandet ist, dass die Bühne (16) zwischen Speichereinheit (6) und Maschine (4) erstreckt angeordnet ist und/oder dass die Bühne (16) einen zwischen Speichereinheit (6) und Maschine (4) vorhandenen Freiraum zumindest abschnittsweise oder in Gänze überfängt.

12. Be- und Entladevorrichtung (2) nach einem der Ansprüche 9 bis 11, **dadurch gekennzeichnet, dass** die Handlingeinheit (14) relativ zur Bühne (16) ortsfest festlegbar oder festgelegt ist.

13. Be- und Entladevorrichtung (2) nach einem der Ansprüche 9 bis 12, **gekennzeichnet durch** mindestens ein zumindest vom Boden (20) bis zur Bühne (16) erstreckten Steigmittel (22), durch das die Bühne (16) durch eine Bedienperson begehbar ist.

14. Be- und Entladevorrichtung (2) nach einem der Ansprüche 9 bis 13, **dadurch gekennzeichnet, dass** der zweite Ladeabschnitt (12) eine Ladefläche umfasst, die parallel oder schräg zur Arbeitsfläche (18) der Bühne (16) angeordnet ist und/oder die die Arbeitsfläche (18) der Bühne (16) in Richtung Speichereinheit (6) fortsetzt oder zur Arbeitsfläche (18) versetzt angeordnet ist.

## Geänderte Patentansprüche

### Geänderte Patentansprüche gemäss Regel 137(2) EPÜ.

1. Speichereinheit (6) für eine Be- und Entladevorrichtung (2), mit mindestens einem ersten Ladeabschnitt (8) zum manuellen und/oder automatischen Be- und/oder Entladen eines Werkstücks (10) und/oder Werkzeugs, mit mindestens einem dem mindestens einen ersten Ladeabschnitt (8) zugeordneten Andockabschnitt (26) für ein autonom geführtes Fahrzeug (24), durch den das autonom geführte Fahrzeug (24) in eine definierte oder definierbare Be- und/oder Entladeposition führbar und in dieser festlegbar ist, und mindestens einem Be- und/oder Entlademittel (28) der Speichereinheit (6) und/oder des autonom geführten Fahrzeugs (24), durch das das mindestens eine Werkstück (10) und/oder Werkzeug von dem autonom geführten Fahrzeug (24) an den ersten Ladeabschnitt (8) übergebbar ist oder umgekehrt und mit mindestens einen zum ersten Ladeabschnitt (8) beabstandeten zweiten Ladeabschnitt (12) zum manuellen und/oder automatischen Be- und/oder Entladen des Werkstücks (10) und/oder Werkzeugs, **dadurch gekennzeichnet, dass** der erste Ladeabschnitt (8) zu einem Boden (20), an dem die Speichereinheit (6) anodenbar oder angeordnet ist, einen Abstand von mindestes 0,5 m, insbesondere mindestens 0,8 m, insbesondere mindestens 1,0 m, umfasst und dass der zweite Ladeabschnitt (12) zum Boden (20) einen Abstand von mindestens 1,8 m, insbesondere mindestens 2,0 m, insbesondere mindestens 2,2 m, umfasst.

2. Speichereinheit (6) nach Anspruch 1, **dadurch gekennzeichnet, dass** das Be- und/oder Entlademittel (28) ein Förderband umfasst, durch das das mindestens eine Werkstück (10) und/oder Werkzeug parallel oder schräg zu einer Beladefläche des ersten Ladeabschnitts (8) übergebbar ist.

3. Speichereinheit (6) nach Anspruch 1 oder 2, **gekennzeichnet durch** mindestens einen Speicherabschnitt (30), in dem mindestens eines des mindestens einen Werkstücks (10) und/oder Werkzeugs bevorratbar ist.

4. Speichereinheit (6) nach einem der vorhergehenden Ansprüche, **gekennzeichnet durch** mindestens ein Transportmittel (32), durch das mindestens eines des mindestens einen Werkstücks (10) und/oder Werkzeugs vom ersten Ladeabschnitt (8), zweiten Ladeabschnitt (12) und/oder Speicherabschnitt (30) zum ersten Ladeabschnitt (8), zweiten Ladeabschnitt (12) und/oder Speicherabschnitt (30) transportierbar ist.

5. Speichereinheit (6) nach Anspruch 4, **dadurch gekennzeichnet, dass** das mindestens eine Transportmittel (32) fahrstuhlartig oder paternosterartig ausgebildet ist.

6. Speichereinheit (6) nach einem der vorhergehenden Ansprüche, **gekennzeichnet, durch** mindestens zwei erste Ladeabschnitte (8), wobei mindestens einer der mindestens zwei ersten Ladeabschnitte (8) dem Beladen der Speichereinheit (6) zugeordnet ist und mindestens einer der mindestens zwei ersten Ladeabschnitte (8) dem Entladen der Speichereinheit (6) zugeordnet ist und/oder durch mindestens zwei zweite Ladeabschnitte (12), wobei mindestens einer der mindestens zwei zweiten Ladeabschnitte (12) dem Beladen der Speichereinheit (6) zugeordnet ist und mindestens einer der mindestens zwei zweiten Ladeabschnitte (12) dem Entladen der Speichereinheit (6) zugeordnet ist.

7. Be- und Entladevorrichtung (2) zum Be- und Entladen mindestens einer Maschine (4), mit mindestens einer Speichereinheit (6) nach einem der Ansprüche 1 bis 6, die mindestens einen ersten Ladeabschnitt (8) zum manuellen und/oder automatischen Be- und/oder Entladen eines Werkstücks (10) und/oder Werkzeugs und mindestens einen zum ersten Ladeabschnitt (8) beabstandeten zweiten Ladeabschnitt (12) zum manuellen und/oder automatischen Be- und/oder Entladen eines Werkstücks (10) und/oder Werkzeugs, und die mindestens ein Transportmittel (32) umfasst, durch das das Werkstück (10) und/oder Werkzeug vom ersten Ladeabschnitt (8) zum zweiten Ladeabschnitt (12) und/oder umgekehrt transportierbar ist, mit mindestens einer Handlingeinheit (14), wie Roboter, durch die das Werkstück (10) und/oder Werkzeug von dem zweiten Ladeabschnitt (12) entnehmbar und einer Maschine (4) zuführbar ist oder umgekehrt und mit mindestens einer Bühne (16), die eine Arbeitsfläche (18) umfasst, die zu einem Boden (20), an dem die Speichereinheit (6) und/oder die Maschine (4) angeordnet ist/sind, beabstandet ist und auf der zumindest die Handlingeinheit (14) anordenbar oder angeordnet ist, um die Maschine (4) von oben zu beladen.

8. Be- und Entladevorrichtung (2) nach Anspruch 7, **dadurch gekennzeichnet, dass** die Arbeitsfläche (18) der Bühne (16) zum Boden (20) einen Abstand von mindestens 1,8 m, insbesondere mindestens 2,0 m, insbesondere mindestens 2,2 m, aufweist.

9. Be- und Entladevorrichtung (2) nach Anspruch 7 oder 8, **dadurch gekennzeichnet, dass** die Bühne (16) die Speichereinheit (6) zur Maschine (4) beabstandet ist, dass die Bühne (16) zwischen Speichereinheit (6) und Maschine (4) erstreckt angeordnet ist und/oder dass die Bühne (16) einen zwischen Speichereinheit (6) und Maschine (4) vorhandenen Freiraum zumindest abschnittsweise oder in Gänze überfängt.

10. Be- und Entladevorrichtung (2) nach einem der Ansprüche 7 bis 9, **dadurch gekennzeichnet, dass** die Handlingeinheit (14) relativ zur Bühne (16) ortsfest festlegbar oder festgelegt ist.

11. Be- und Entladevorrichtung (2) nach einem der Ansprüche 7 bis 10, **gekennzeichnet durch** mindestens ein zumindest vom Boden (20) bis zur Bühne (16) erstreckten Steigmittel (22), durch das die Bühne (16) durch eine Bedienperson begehbar ist.

12. Be- und Entladevorrichtung (2) nach einem der Ansprüche 7 bis 11, **dadurch gekennzeichnet, dass** der zweite Ladeabschnitt (12) eine Ladefläche umfasst, die parallel oder schräg zur Arbeitsfläche (18) der Bühne (16) angeordnet ist und/oder die die Arbeitsfläche (18) der Bühne (16) in Richtung Speichereinheit (6) fortsetzt oder zur Arbeitsfläche (18) versetzt angeordnet ist.
